# EUROPÄISCHE PATENTANMELDUNG

(11) **EP 4 717 503 A1**
(43) Veröffentlichungstag der Anmeldung: **01.04.2026**
(21) Anmeldenummer: 25202030.0
(22) Anmeldetag: 12.09.2025
(51) Int. Cl.: B60L 3/00, B60L 3/04, B60L 50/60, B60L 53/14, B60L 53/20

(54) **LADEGERÄT ZUM LADEN EINES ELEKTRO- ODER HYBRIDFAHRZEUGS**

(30) Priorität: 17.09.2024 DE 102024208883
(71) Anmelder: VOLKSWAGEN AG, 38440 Wolfsburg (DE)
(72) Erfinder: Henkenius, Carsten, 38440 Wolfsburg (DE); Pfennigwerth, Ralf, 38440 Wolfsburg (DE)

(57) **Zusammenfassung**

Die Erfindung betrifft ein Ladegerät (1) um Laden eines Elektro- oder Hybridfahrzeugs, wobei das Ladegerät (1) Anschlüsse (AC-L1, AC-L2, AC-L3, AC-N) für ein externes Wechselspannungsnetz, einen Gleichrichter (2), einen galvanisch getrennten DC/DC-Wandler (3) und eine Steuereinheit (13) aufweist, wobei an den Anschlüssen (AC-L1, AC-L2, AC-L3, AC-N) für das externe Wechselspannungsnetz Schaltelemente (S) angeordnet sind, wobei die Steuereinheit (13) derart ausgebildet ist, mindestens die Schaltelemente (S) und den Gleichrichter (2) anzusteuern, wobei das Ladegerät (1) einen Transformator (6) mit einer Primärwicklung (8) und einer Sekundärwicklung (9) aufweist, wobei die Primärwicklung (8) mit einem Wechselspannungseingang des DC/DC-Wandlers (3) verbunden ist und die Sekundärwicklung (9) über einen zweiten Gleichrichter (12) mit der Steuereinheit (13) verbunden ist, wobei Leitungen (10) von den Anschlüssen (AC-L1, AC-L2, AC-L3, AC-N) zu dem Gleichrichter (2) als Wicklungen (11) um den Transformator (6) geführt sind, wobei das Ladegerät (1) derart ausgebildet ist, anhand einer sich ändernden Spannung (U_{sec}) an der Sekundärwicklung (9) auf einen Fehlerstrom zu schließen und die Schaltelemente (S) zu öffnen.

## Beschreibung

Die Erfindung betrifft ein Ladegerät zum Laden eines Elektro- oder Hybridfahrzeugs in einem Kraftfahrzeug.

Solche On-board-Ladegeräte dienen dazu, ein Laden einer Hochvoltbatterie im Kraftfahrzeug aus einem externen Wechselspannungsnetz zu ermöglichen. Hierzu weist das Ladegerät Anschlüsse auf, um das Ladegerät mit der externen Ladesäule zu verbinden. Die Wechselspannung wird dann im Ladegerät in eine Gleichspannung gleichgerichtet und an die Ladespannung der Hochvoltbatterie mittels eines DC/DC-Wandlers angepasst. Aus Sicherheitsgründen sind diese DC/DC-Wandler vorzugsweise als galvanisch getrennte DC/DC-Wandler ausgebildet.

Aufgrund verschiedenster Ursachen kann es beim Laden zu Fehlerströmen kommen. Diese Fehlerströme können zu Potentialen führen, die eine Gefahrenquelle darstellen. Daher sind Fehlerstromüberwachungsmittel bekannt, die im erfassten Fehlerfall den Ladevorgang abbrechen. Dabei wird noch zwischen Fehlerstromschutzschalter Typ A und B unterschieden, wobei die Fehlerstromschutzschalter vom Typ A nur rein sinusförmige Wechselströme sowie pulsierende Gleichfehlerströme erfassen. Fehlerstromschutzschalter vom Typ B werden auch als allstromsensitive Fehlerstromschutzschalter bezeichnet, mittels dessen auch glatte Gleichstromfehlerströme erfasst werden können.

Aus der DE 10 2009 034 887 A1 und der DE 10 2010 028 626 A1 sind jeweils Ladestationen für Elektrofahrzeuge bekannt, die Fehlerstromschutzschalter aufweisen.

Der Erfindung liegt das technische Problem zugrunde, ein On-board-Ladegerät für ein Elektro- oder Hybridfahrzeug zu schaffen, das eine integrierte Fehlerstromüberwachung aufweist.

Die Lösung des technischen Problems ergibt sich durch ein Ladegerät mit den Merkmalen des Anspruchs 1. Weitere vorteilhafte Ausgestaltungen der Erfindung ergeben sich aus den Unteransprüchen.

Hierzu weist das Ladegerät zum Laden eines Elektro- oder Hybridfahrzeugs Anschlüsse für ein externes Wechselspannungsnetz, einen Gleichrichter, einen galvanisch getrennten DC/DC-Wandler und eine Steuereinheit auf. An den Anschlüssen für das externe Wechselspannungsnetz sind Schaltelemente angeordnet. Die Steuereinheit ist derart ausgebildet, mindestens die Schaltelemente und den Gleichrichter anzusteuern. Vorzugsweise steuert die Steuereinheit auch den DC/DC-Wandler an. Weiter weist das Ladegerät einen Transformator mit einer Primärwicklung und einer Sekundärwicklung auf, wobei die Primärwicklung mit einem Wechselspannungseingang des DC/DC-Wandlers verbunden ist und die Sekundärwicklung über einen zweiten Gleichrichter mit der Steuereinheit verbunden ist.

Weiter sind Leitungen von den Anschlüssen zu dem Gleichrichter als Wicklungen um den Transformator bzw. Transformatorkern geführt. Dabei ist das Ladegerät derart ausgebildet, anhand einer sich ändernden Spannung an der Sekundärwicklung auf einen Fehlerstrom zu schließen und die Schaltelemente zu öffnen. Die Grundidee ist dabei, dass die Wicklungen der Leitungen von den Anschlüssen einen Summenstromwandler bilden. Im fehlerfreien Fall ist die Summe der Ströme null. Im Fehlerfall ist der Summenstrom ungleich null und erzeugt einen magnetischen Fluss, der die Kopplung zwischen Primärwicklung und Sekundärwicklung reduziert, sodass die Sekundärspannung sich verkleinert.

In einer Ausführungsform ist der zweite Gleichrichter mit einem Versorgungsspannungsanschluss der Steuereinheit verbunden. Der Transformator dient also nicht nur zur Erfassung eines Fehlerstromes, sondern stellt auch im Ladebetrieb die Versorgungsspannung für die Steuereinheit zur Verfügung.

In einer weiteren Ausführungsform ist der zweite Gleichrichter mit einem Komparator verbunden, wobei der Komparator derart ausgebildet ist, ein Fehlerstromsignal zu erzeugen, wenn die Spannung am Gleichrichter kleiner als eine Referenzspannung ist. Der Vorteil eines Komparators ist, dass die Fehlerstromerkennung sehr schnell und robust ist. Dabei kann auch eine redundante Fehlerstromerkennung erfolgen, die einerseits über den Komparator und andererseits über die Steuereinheit erfolgt.

In einer Ausführungsform ist der Komparator, insbesondere der Ausgang des Komparators, mit der Steuereinheit verbunden. Die Steuereinheit kann dann in Abhängigkeit eines erkannten Fehlerstromsignals Schaltbefehle für die Schaltelemente erzeugen und diese öffnen und den Gleichrichter abschalten.

In einer alternativen Ausführungsform ist der Ausgang des Komparators mit mindestens einem Gatter verbunden, über das die Schaltsignale für die Schaltelemente und den Gleichrichter geführt sind, sodass eine Hardware die Abschaltbefehle erzeugt.

In einer weiteren Ausführungsform ist die Referenzspannung größer als eine minimale Betriebsspannung der Steuereinheit gewählt. Hierdurch ist gewährleistet, dass die Steuereinheit noch arbeitsfähig ist, wenn die Abschaltung aufgrund eines Fehlerstroms erfolgen soll und die Spannung am zweiten Gleichrichter die Betriebsspannung der Steuereinheit ist.

In einer weiteren Ausführungsform wird die Referenzspannung über eine Zehnerdiode eingestellt.

In einer weiteren Ausführungsform weist das Ladegerät Anschlüsse für ein dreiphasiges Wechselspannungsnetz auf.

Die Erfindung wird nachfolgend anhand eines bevorzugten Ausführungsbeispiels näher erläutert. Die Figuren zeigen:
- Fig. 1: ein schematisches Blockschaltbild eines On-board-Ladegerätes,
- Fig. 2: eine schematische Darstellung eines Kopplungsfaktors über dem magnetischen Fluss und
- Fig. 3: zeitliche Verläufe verschiedener Signale im Falle eines Fehlerstromereignisses.

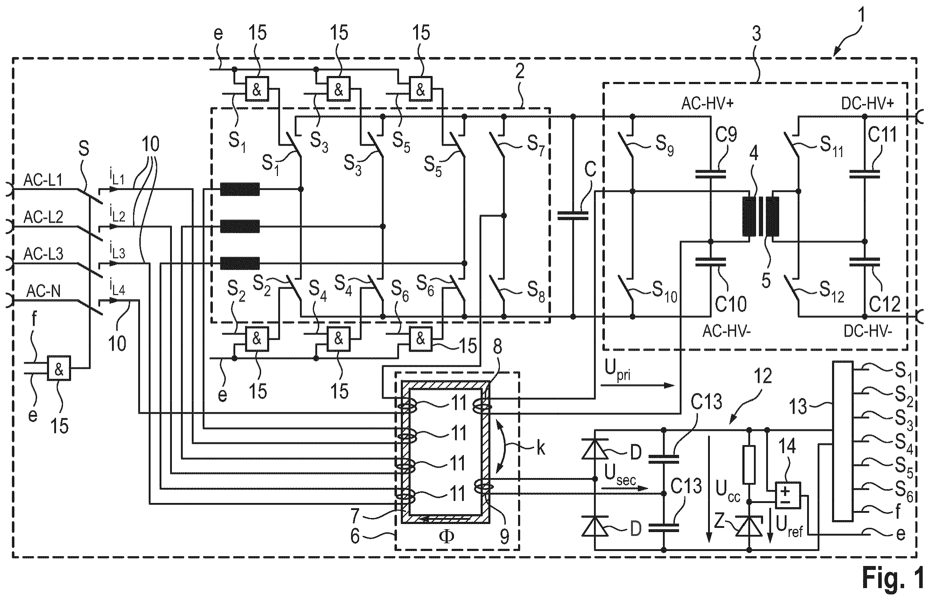

In der Fig. 1 ist schematisch ein Ladegerät 1 dargestellt. Das Ladegerät 1 weist Anschlüsse AC-L1, AC-L2, AC-L3 und AC-N für ein nicht dargestelltes dreiphasiges, externes Wechselspannungsnetz auf. Die Anschlüsse AC-L1, AC-L2, AC-L3 und AC-N sind über Schaltelemente S mit einem Gleichrichter 2 verbunden. Die Schaltelemente S sind vorzugsweise als Relais ausgebildet, wobei nur ein Schaltelement S mit einem Bezugszeichen versehen wurde. Der Gleichrichter 2 weist für jede Wechselspannungsphase eine Eingangsinduktivität L auf, die jeweils mit dem anderen Ende mit einem Mittelabgriff einer Halbbrücke verbunden ist. Dabei ist der Neutralleiter AC-N ebenfalls mit einer Halbbrücke verbunden. In den vier Halbbrücken sind Schalter S₁-S₈ angeordnet, die vorzugsweise als IGBTs oder MOSFETs ausgebildet sind. Der Gleichrichter 2 ist mit einem galvanisch getrennten DC/DC-Wandler 3 verbunden, wobei zwischen dem Gleichrichter 2 und dem galvanisch getrennten DC/DC-Wandler 3 ein Zwischenkreiskondensator C angeordnet ist. Der DC/DC-Wandler 3 weist eingangsseitig eine Halbbrücke bestehend aus zwei Schaltern S₉ und S₁₀ auf, zu denen zwei in Reihe geschaltete Kondensatoren C9, C10 parallel geschaltet sind. Weiter ist eine erste Wicklung 4 vorgesehen, die einerseits mit einem Mittelabgriff zwischen den beiden Schaltern S₉, S₁₀ und andererseits mit einem Mittelabgriff zwischen den beiden Kondensatoren C9, C10 verbunden ist. Die beiden Mittelabgriffe stellen den Wechselspannungseingang des DC/DC-Wandlers 3 dar. Ausgangsseitig ist der DC/DC-Wandler 3 spiegelbildlich zum Eingang ausgebildet. Anschaulich zerhackt die eingangsseitige Halbbrücke die Gleichspannung in eine Wechselspannung, die dann von der ersten Wicklung 4 auf eine zweite Wicklung 5 induktiv übertragen wird, wobei ausgangsseitig die Wechselspannung über die Halbbrücke mit den Schaltern S₁₁, S₁₂ und die Kondensatoren C11, C12 wieder gleichgerichtet wird und zum Laden einer nicht dargestellten Hochvoltbatterie zur Verfügung steht.

Weiter weist das Ladegerät 1 einen Transformator 6 mit einem Kern 7 auf. Auf den Kern 7 ist eine Primärwicklung 8 und eine Sekundärwicklung 9 gewickelt. Die Primärwicklung 8 ist mit dem Wechselspannungseingang (die beiden Mittelabgriffe) des DC/DC-Wandlers 3 verbunden. Weiter sind die Leitungen 10 von den Anschlüssen AC-L1, AC-L2, AC-L3, AC-N als Wicklungen 11 um den Kern 7 gewickelt, bevor diese zum Gleichrichter 2 geführt werden. Die Sekundärwicklung ist mit einem zweiten Gleichrichter 12 verbunden, der beispielsweise aus zwei Dioden D und zwei Kondensatoren C13 besteht. Am Ausgang des zweiten Gleichrichters 12 liegt dann eine Gleichspannung U_{CC} an.

Weiter weist das Ladegerät 1 eine Steuereinheit 13 auf, die die Ansteuersignale für die Schaltelemente S, die Schalter S₁-S₈ des Gleichrichters 2 und die Schalter S₉-S₁₂ DC/DC-Wandlers 3 erzeugt. Zwischen dem Ausgang des zweiten Gleichrichters 12 und der Steuereinheit 13 ist ein Komparator 14 angeordnet, dessen Plus-Eingang mit dem Ausgang des zweiten Gleichrichters 12 verbunden ist. Der Minus-Eingang liegt auf einer Referenzspannung U_{ref}, die mittels einer Zehnerdiode Z eingestellt wird. Die Spannung U_{CC} am Ausgang des zweiten Gleichrichters 12 stellt dabei auch die Versorgungsspannung für die Steuereinheit 13 zur Verfügung.

Zum Starten des Ladevorganges muss die Steuereinheit 13 kurzzeitig mit Spannung versorgt werden. Dies kann beispielsweise aus einem nicht dargestellten Bordnetz oder einer Batterie erfolgen. Alternativ kann kurzzeitig der DC/DC-Wandler von der Hochvoltbatterie eine Spannung zur Verfügung stellen. Die Steuereinheit 13 erzeugt dann ein Ansteuersignal f, um die Schaltelemente S zu schließen. Die Wechselspannungen werden dann vom Gleichrichter 2 gleichgerichtet und vom DC/DC-Wandler 3 an die Ladespannung der Hochvoltbatterie angepasst.

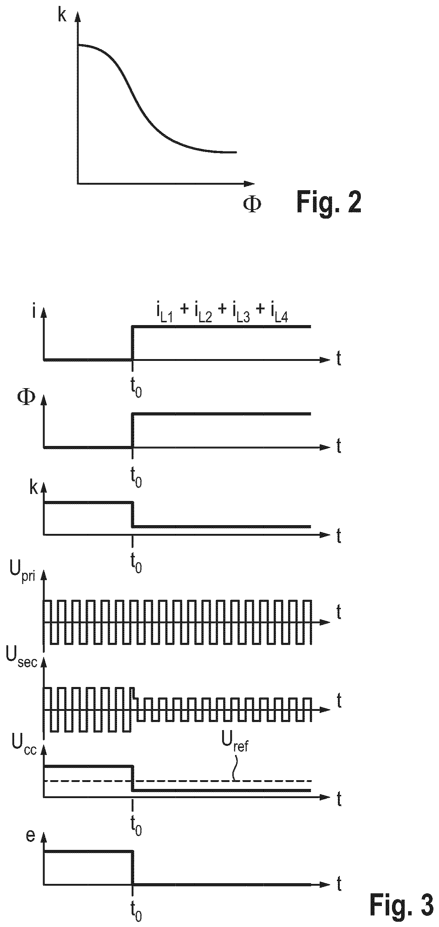

Die Wirkungsweise des Ladegerätes 1 soll nun anhand der Fig. 2 und Fig. 3 näher erläutert werden, wobei in Fig. 2 eine Kopplung k zwischen der Primärwicklung 8 und der Sekundärwicklung 9 aufgrund eines magnetischen Flusses ϕ im Kern 7 dargestellt ist.

In der Fig. 3 oben ist der Summenstrom i = i_{L1} + i_{L2} + i_{L3} + i_{L4} dargestellt. Im fehlerfreien Betrieb ist der Summenstrom i = 0 und erzeugt keinen magnetischen Fluss ϕ. Entsprechend existiert eine große, konstante magnetische Kopplung k zwischen der Primärwicklung 8 und der Sekundärwicklung 9, sodass sich eine große Sekundärspannung U_{sec} einstellt. Entsprechend ist die Spannung U_{CC} größer als die Referenzspannung U_{ref} und am Ausgang des Komparators 14 liegt eine 1 an (e=1). Tritt dann zum Zeitpunkt t₀ ein Fehler auf, aufgrund dessen der Summenstrom ungleich null ist, so kommt es zu einem magnetischen Fluss ϕ, sodass die magnetische Kopplung k abnimmt. Als Folge sinkt die Sekundärspannung U_{sec} und die Spannung U_{CC} sinkt unter die Referenzspannung U_{ref}. Als Ergebnis ist das Ausgangssignal e=0 am Komparator 14. Die Schaltelemente S und die Schalter S₁-S₆ werden geöffnet. Dies kann beispielsweise durch und-Gatter 15 realisiert werden (siehe auch Fig. 1), wobei dann am Ausgang der Gatter 15 immer eine Null anliegt, wenn das Signal e=0. Die Steuereinheit 13 kann dann noch anschließend den Zwischenkreiskondensator C durch Ansteuern des DC/DC-Wandlers 3 entladen.

### Bezugszeichenliste

- 1: Ladegerät
- 2: Gleichrichter
- 3: DC/DC-Wandler
- 4: erste Wicklung
- 5: zweite Wicklung
- 6: Transformator
- 7: Kern
- 8: Primärwicklung
- 9: Sekundärwicklung
- 10: Leitung
- 11: Wicklung
- 12: Gleichrichter
- 13: Steuereinheit
- 14: Komparator
- 15: Gatter
- AC-L1: Anschluss
- AC-L2: Anschluss
- AC-L3: Anschluss
- AC_N: Anschluss
- C: Zwischenkreiskondensator
- C9-C13: Kondensatoren
- D: Diode
- e: Fehlerstromsignal
- k: Kopplung
- S: Schaltelement
- S₁-S₁₂: Schalter
- U_{CC}: Spannung
- U_{ref}: Referenzspannung
- U_{sec}: Sekundärspannung
- Z: Zehnerdiode

## Patentansprüche

1. Ladegerät (1) um Laden eines Elektro- oder Hybridfahrzeugs, wobei das Ladegerät (1) Anschlüsse (AC-L1, AC-L2, AC-L3, AC-N) für ein externes Wechselspannungsnetz, einen Gleichrichter (2), einen galvanisch getrennten DC/DC-Wandler (3) und eine Steuereinheit (13) aufweist, wobei an den Anschlüssen (AC-L1, AC-L2, AC-L3, AC-N) für das externe Wechselspannungsnetz Schaltelemente (S) angeordnet sind, wobei die Steuereinheit (13) derart ausgebildet ist, mindestens die Schaltelemente (S) und den Gleichrichter (2) anzusteuern, wobei das Ladegerät (1) einen Transformator (6) mit einer Primärwicklung (8) und einer Sekundärwicklung (9) aufweist, wobei die Primärwicklung (8) mit einem Wechselspannungseingang des DC/DC-Wandlers (3) verbunden ist und die Sekundärwicklung (9) über einen zweiten Gleichrichter (12) mit der Steuereinheit (13) verbunden ist, wobei Leitungen (10) von den Anschlüssen (AC-L1, AC-L2, AC-L3, AC-N) zu dem Gleichrichter (2) als Wicklungen (11) um den Transformator (6) geführt sind, wobei das Ladegerät (1) derart ausgebildet ist, anhand einer sich ändernden Spannung (U_{sec}) an der Sekundärwicklung (9) auf einen Fehlerstrom zu schließen und die Schaltelemente (S) zu öffnen.

2. Ladegerät nach Anspruch 1, **dadurch gekennzeichnet, dass** der zweite Gleichrichter (12) mit einem Versorgungsspannungsanschluss der Steuereinheit (13) verbunden ist.

3. Ladegerät nach Anspruch 1 oder 2, **dadurch gekennzeichnet, dass** der zweite Gleichrichter (12) mit einem Komparator (14) verbunden ist, wobei der Komparator (14) derart ausgebildet ist, ein Fehlerstromsignal (e) zu erzeugen, wenn die Spannung (U_{CC}) am Gleichrichter (12) kleiner als eine Referenzspannung (U_{ref}) ist.

4. Ladegerät nach Anspruch 3, **dadurch gekennzeichnet, dass** der Ausgang des Komparators (14) mit der Steuereinheit (13) verbunden ist.

5. Ladegerät nach Anspruch 3, **dadurch gekennzeichnet, dass** der Ausgang des Komparators (14) mit mindestens einem Gatter (15) verbunden ist.

6. Ladegerät nach einem der Ansprüche 3 bis 5, **dadurch gekennzeichnet, dass** die Referenzspannung (U_{ref}) größer als eine minimale Betriebsspannung der Steuereinheit (13) gewählt ist.

7. Ladegerät nach einem der Ansprüche 3 bis 6, **dadurch gekennzeichnet, dass** die Referenzspannung (U_{ref}) über eine Zehnerdiode (Z) eingestellt ist.

8. Ladegerät nach einem der vorangegangenen Ansprüche, **dadurch gekennzeichnet, dass** das Ladegerät (1) Anschlüsse (AC-L1, AC-L2, AC-L3, AC-N) für ein dreiphasiges Wechselspannungsnetz aufweist.
